# EUROPÄISCHE PATENTSCHRIFT

(11) **EP 1 401 566 B1**
(45) Veröffentlichungstag und Bekanntmachung des Hinweises auf die Patenterteilung: **17.11.2004**
(21) Anmeldenummer: 02740689.1
(22) Anmeldetag: 05.06.2002
(51) Int. Cl.: B01J 8/02, B01J 8/04, G01N 31/10

(54) **REAKTOR ZUM TESTEN VON KATALYSATORSYSTEMEN**
REACTOR FOR TESTING CATALYST SYSTEMS
REACTEUR POUR TESTER DES SYSTEMES DE CATALYSEUR

(30) Priorität: 06.06.2001 DE 10127374
(43) Veröffentlichungstag der Anmeldung: 31.03.2004
(73) Patentinhaber: BASF Aktiengesellschaft, 67056 Ludwigshafen (DE)
(72) Erfinder: OLBERT, Gerhard, 69221 Dossenheim (DE); MATTKE, Torsten, 67251 Freinsheim (DE); KUMMER, Matthias, 67273 Weisenheim (DE); RÜHL, Thomas, 67227 Frankenthal (DE); ROSOWSKI, Frank, 68165 Mannheim (DE)
(74) Vertreter: Isenbruck, Günter, Dr.
(86) Internationale Anmeldenummer: PCT/EP2002/006177
(87) Internationale Veröffentlichungsnummer: WO 2002/098551

(56) Entgegenhaltungen:
- EP-A- 0 911 313
- DE-A- 2 714 939
- DE-A- 2 830 765
- US-B1- 6 419 884

## Beschreibung

Die Erfindung betrifft einen Reaktor zum Testen von Katalysatorsystemen, ein Verfahren sowie eine Verwendung.

In der chemischen Industrie werden eine Vielzahl von großtechnischen Reaktionen in Kontaktrohrbündelreaktoren durchgeführt. Dabei wird ein fluides, häufig gasförmiges Reaktionsmedium durch eine Vielzahl, häufig 10000 bis 40000 Kontaktrohre geleitet, die mit einem Katalysatorsystem befüllt sind, das heißt mit einem Katalysatorträger, auf den Aktivmaterial aufgebracht ist oder mit einem Vollkatalysator. Der Zwischenraum zwischen den Kontaktrohren wird von einem Wärmetauschmittel, beispielsweise einer Salzschmelze, durchströmt, das Wärme zu- oder abführt.

Zur Erprobung von neuen Katalysatorsystemen oder von bekannten Katalysatorsystemen in Verbindung mit neuen Reaktionsmedien wurden bislang Reaktoren im Pilotmaßstab mit mehreren Kontaktrohren eingesetzt, die jeweils mit demselben zu testenden Katalysatorsystem befüllt waren und die von einem Wärmetauschmittel umströmt waren. Ein derartiger Reaktor war daher für die Dauer der Erprobung eines Katalysatorsystems für weitere Einsätze nicht verfügbar.

Es war demgegenüber Aufgabe der Erfindung, einen Reaktor sowie ein Verfahren zur Verfügung zu stellen womit gleichzeitig mehrere Katalysatorsysteme oder ein Katalysatorsystem unter jeweils verschiedenen Bedingungen getestet werden kann.

Die Lösung geht aus von einem Reaktor zum Testen von Katalysatorsystemen mit mehreren, im Reaktorinnenraum parallel zueinander angeordneten Kontaktrohren, die an ihren Enden in Rohrböden eingeschweißt sind, sowie mit Hauben an beiden Reaktorenden, die jeweils einen Haubenraum abgrenzen, wobei ein fluides Reaktionsmedium über einen Haubenraum den Kontaktrohren zugeführt wird, die Kontaktrohre durchströmt und über den anderen Haubenraum abgeführt wird, sowie mit einem Wärmetauschmittelkreislauf mit Zuführung des Wärmetauschmittels an einem Reaktorende, Durchströmen des Zwischenraums zwischen den Kontaktrohren und Ableitung am anderen Reaktorende. Die Erfindung ist dadurch gekennzeichnet, daß die Kontaktrohre in zwei oder mehreren, thermisch voneinander getrennten Kontaktrohrbereichen angeordnet sind.

Der erfindungsgemäße Reaktor ist in der Regel ein Reaktor im Pilotmaßstab, die Erfindung ist jedoch grundsätzlich bezüglich der Reaktorgröße nicht eingeschränkt. Die Reaktorform ist häufig, jedoch nicht ausschließlich kreiszylindrisch. Beispielsweise ist auch eine rechteckige oder Vieleckform des Reaktorquerschnittes möglich. Im Reaktorinnenraum, in Richtung der Reaktorlängsachse, sind mehrere Kontaktrohre, mindestens 10, bevorzugt mindestens 20, parallel zueinander angeordnet und an ihren Enden in Rohrböden eingeschweißt. Die angeführte Mindestanzahl von Kontaktrohren ist erforderlich, um repräsentative Meßergebnisse für Kontaktrohrbündelreaktoren zu erhalten. An jedem Reaktorende befindet sich eine Haube, die jeweils einen Haubenraum abgrenzt. Ein fluides, häufig gasförmiges, Reaktionsmedium wird über einen Haubenraum dem Reaktor zugeführt, durchströmt die Kontaktrohre und wird über den anderen Haubenraum abgeführt. Der Zwischenraum zwischen den Kontaktrohren wird von einem Wärmetauschmittel durchströmt, das an einem Reaktorende zugeführt und am anderen Reaktorende abgeführt wird.

Erfindungsgemäß werden die Kontaktrohre in zwei oder mehreren, bevorzugt in vier, thermisch voneinander getrennten Kontaktrohrbereichen angeordnet. Thermische Trennung bedeutet vorliegend keine vollständige Isolierung der einzelnen Kontaktrohrbereiche voneinander, es ist jedoch erforderlich, die Kontaktrohrbereiche gegeneinander so weit abzugrenzen, daß weitgehend kein Temperaturaustausch zwischen den einzelnen Kontaktrohrbereichen stattfindet.

Hierfür ist in der Regel ausreichend, daß zwischen zwei benachbarten Kontaktrohren, die jeweils unterschiedlichen Kontaktrohrbereichen angehören, jeweils mindestens ein Blindrohr oder runder Vollmaterialstab mit gleichem Außendurchmesser wie die Kontaktrohre angeordnet ist. Die Blindrohre sind an beiden Enden geschlossene Rohre, die somit nicht vom Reaktionsmedium durchströmt werden können. Die Vollmaterialstäbe sind häufig Eisenstäbe. Der gleiche Außendurchmesser wie die Kontaktrohre ist erforderlich, um gleiche Umströmungsbedingungen zu gewährleisten. Die Anordnung der Blindrohre oder runden Vollmaterialstäbe zwischen den Kontaktrohrbereichen soll in der Weise erfolgen, daß keine Bypässe für das Wärmetauschmittel geschaffen werden. Vorzugsweise ist die Anordnung der Kontaktrohre über den gesamten Querschnitt des Reaktors durch die Ausbildung von Kontaktrohrbereichen unter Einsatz von Blindrohren oder Vollmaterialstäben gegenüber einem bekannten Reaktor ohne Kontaktrohrbereiche nicht verändert, um Störungen im Strömungsverlauf des Wärmetauschmittels durch den Zwischenraum zwischen den Kontaktrohren zu vermeiden.

Bevorzugt kann in einem oder mehreren Kontaktrohrbereichen jeweils mindestens ein Kontaktrohr mit einer Hülse zur Aufnahme eines Thermoelements ausgestattet, im übrigen mit Inertmaterial, insbesondere einer Schüttung von Aluminiumoxid befüllt und an beiden Enden geschlossen sein. Mit dieser Anordnung kann das Temperaturprofil des die Kontaktrohre umströmenden Wärmetauschmittels in Reaktorlängsrichtung bestimmt werden. Die Befüllung mit Inertmaterial ist zweckmäßig, um die Temperatur des die Kontraktrohre umströmenden Wärmetauschmittels möglichst unverfälscht mittels des Thermoelements bestimmen zu können. Als Inertmaterial eignet sich insbesondere eine Schüttung von Aluminiumoxid, wobei die Teilchengröße und -form in zweckmäßiger Weise so gewählt wird, daß das Aluminiumoxid gut schüttbar ist. Mittlere Teilchengrößen von 1 bis 5 mm, bevorzugt von etwa 2 mm sind besonders geeignet. Das Kontaktrohr muß verschlossen sein, um die Durchströmung von Reaktionsgemisch zu verhindern, insbesondere an beiden Enden.

Bevorzugt können in einem oder mehreren Kontaktrohrbereichen jeweils ein oder mehrere Kontaktrohre mit Hülsen zur Aufnahme von Probenahmeröhrchen und/oder Thermoelementen vorgesehen sein. Die Ausbildung der Hülsen sowie der darin angeordneten Probenahmeröhrchen und/oder Thermoelemente erfolgt bevorzugt wie in der nicht vorveröffentlichten deutschen Patentanmeldung DE 101 10 847.8 beschrieben, die hiermit voll umfänglich in den Offenbarungsgehalt der vorliegenden Erfindung einbezogen wird.

Es ist zweckmäßig, die Kontaktrohre, die mit Hülsen zur Aufnahme von Probenahmeröhrchen und/oder Thermoelementen vorgesehen sind gegenüber den übrigen Kontaktrohren mit einem größeren Außendurchmesser zu wählen, insbesondere einem um ca. 2 bis 3 mm größeren Außendurchmesser, um den Volumenverbrauch im Innenraum des Kontaktrohrs durch die Hülse zu kompensieren und somit den realen Konzentrations- und/oder Temperaturverlauf im Kontaktrohr nicht zu verfälschen.

Analog ist es auch möglich, die Kontaktrohre, die mit einer Hülse zur Aufnahme eines Thermoelements ausgestattet, im übrigen mit Inertmaterial befüllt und an beiden Enden geschlossen sind und die zur Messung des longitudinalen Temperatuprofils des Wärmetauschmittels dienen, entsprechend mit einem größeren Außendurchmesser zu wählen.

In einer bevorzugten Alternative können die Kontaktrohre in unterschiedlichen Kontaktrohrbereichen mit unterschiedlichem Rohrinnendurchmesser und/oder mit unterschiedlicher Rohrteilung ausgebildet sein. Der Begriff Rohrteilung bezeichnet hierbei in bekannter Weise den Abstand zwischen den Mittelpunkten zweier benachbarter Kontaktrohre. Bevorzugt ist eine Dreiecksteilung, das heißt eine Anordnung der Rohrmittelpunkte von benachbarten Kontaktrohren an den Ecken eines gleichseitigen Dreiecks.

Bevorzugt kann eine Abdeckung für die Kontaktrohre eines oder mehrerer Kontaktrohrbereiche vorgesehen sein. Dadurch ist es möglich, das Reaktionsmedium über den Haubenraum einströmen zu lassen, den oder die nicht abgedeckten Kontaktrohrbereiche zu durchströmen und anschließend den Reaktor über den anderen Haubenraum zu verlassen. Dabei wird das Katalysatorsystem in dem oder den Kontaktrohrbereich(en), die abgedeckt sind, nicht vom Reaktionsmedium durchströmt. Somit kann beispielsweise in den nicht abgedeckten Kontaktrohrbereichen unter schärferen Bedingungen gefahren werden, ohne daß das Katalysatorsystem in dem oder den abgedeckten Kontaktrohrbereich(en) beeinflußt insbesondere geschädigt wird.

In einer weiteren Ausführungsform ist es möglich, den Haubenraum, über den das Reaktionsmedium abgezogen wird, mittels Trennwänden aufzuteilen, dergestalt, daß aus jedem Kontaktrohrbereich das Reaktionsmedium getrennt abgezogen werden kann. Diese Ausgestaltung hat insbesondere den Vorteil, daß lediglich eine Analytik erforderlich ist, die nach Bedarf auf die einzelnen Kontaktrohrbereiche umgestellt werden kann. Alternativ oder zusätzlich kann auch der andere Haubenraum, der der Zuführung des Reaktionsmediums dient, in gleicher Weise aufgeteilt werden. Bei diesen Reaktorvarianten ist die Flexibilität bezüglich der Führung des Reaktionsmediums weiter erhöht Beispielsweise ist es hierdurch möglich, insbesondere in der Variante mit Aufteilung beider Haubenräume, das Reaktionsmedium, das aus einem Kontaktrohrbereich abgezogen wird, gegebenenfalls unter Zwischeneinspeisung weiterer Edukte und/oder Zwischenkühlung über einen außenliegenden Wärmetauscher, erneut einem weiteren Kontaktrohrbereich zuzuführen. Diese Vorgehensweise kann ebenso auf weitere, insbesondere auch auf sämtliche Kontaktrohrbereiche ausgedehnt werden, wobei jeweils das Reaktionsmedium aus einem Kontaktrohrbereich abgezogen und in einen nächsten Kontaktrohrbereich, gegebenenfalls unter Zwischeneinspeisung und/oder Zwischenkühlung erneut zugeführt wird. Dadurch ist es insbesondere möglich, mit Hilfe eines Reaktors mit gegebener Länge der Kontaktrohre einen um das Doppelte oder Mehrfache größeren Reaktor, das heißt mit der doppelten oder mehrfachen Länge der Kontaktrohre, zu simulieren.

Eine weitere Flexibilisierung wird durch eine bevorzugte Reaktorvariante erreicht, worin der von Wärmetauschmittel durchströmte Zwischenraum zwischen den Kontaktrohren mittels Trennwänden in zwei oder mehrere, bevorzugt vier Kammern aufgeteilt ist, die jeweils einem Kontaktrohrbereich entsprechen. Dadurch kann für jeden einzelnen Kontaktrohrbereich jeweils ein getrennter Wärmetauschmittelkreislauf realisiert werden. Die einzelnen Wärmetauschmittelkreisläufe können unabhängig voneinander betrieben werden, insbesondere bezüglich Gleich- oder Gegenstromführung mit dem Reaktionsmedium, bezüglich Kühlmitteltemperatur und/oder Volumenstrom des Wärmetauschmittels. Die einzelnen Kammern für das Wärmetauschmittel sind zur Reaktorinnenwand abgedichtet, insbesondere mittels Metalldichtungen. Hierbei sind grundsätzlich die dem Fachmann bekannten Abdichtelemente, beispielsweise federnde Abdichtelemente mit geführten metallischen Abdichtstreifen, einsetzbar.

In einer besonderen Ausführungsvariante wird in einem oder mehreren Wärmetanschmittelkreisläufen jeweils eine besonders ausgestaltete Pumpe eingesetzt, die es ermöglicht, das Wärmetauschmittel, insbesondere eine Salzschmelze, mit der üblichen Pumpenanordnung, das heißt mit Förderung nach unten vorzusehen, wobei dennoch der Eintritt des Wärmetauschmittels in den Zwischenraum zwischen den Kontaktrohren im oberen Bereich desselben erfolgt. Hierdurch kann, bei der üblichen Führung des Reaktionsmediums von oben nach unten durch die Kontaktrohre in einfacher Weise eine Gleichstromführung erreicht werden.

Diese Ausführungsvariante umfaßt einen Reaktor mit vertikal angeordneter Längsachse, mit Zuführung des Wärmetauschmittels in den Zwischenraum zwischen den Kontaktrohren im oberen Bereich des Reaktors und Abführung des Wärmetauschmittels aus dem unteren Bereich des Reaktors, bevorzugt über jeweils eine Ringleitung, wobei das aus dem unteren Bereich des Reaktors mittels einer Pumpe abgezogene Wärmetauschmittel in ein Gehäuse einströmt, das das Pumpenleitrohr umschließt, im Bereich zwischen der Innenwand des Gehäuses und der Außenwand des Pumpenleitrohrs, gegebenenfalls über einen Wärmetauscher, nach oben strömt, über eine Öffnung im oberen Bereich des Pumpenleitrohrs in den Innenraum des Pumpenleitrohrs einströmt, diesen von oben nach unten durchströmt, über eine Öffnung im unteren Bereich des Pumpenleitrohrs in einen weiteren Bereich zwischen der Innenwand des Gehäuses und Außenwand des Pumpenleitrohrs einströmt, diesen Bereich von unten nach oben durchströmt und über eine Öffnung in dessen oberen Bereich in den oberen Bereich des Zwischenraums zwischen den Kontaktrohren einströmt.

Das Gehäuse kann in fertigungstechnisch vorteilhafter Weise mit rechteckigem Querschnitt ausgebildet sein, es ist jedoch auch möglich, insbesondere für höhere Druckbelastungen, das Gehäuse mit kreisförmigem Querschnitt auszubilden.

Gegenstand der Erfindung ist auch ein Verfahren zum Testen von Katalysatorsystemen mit Hilfe eines Reaktors, wobei man in jeweils verschiedenen Kontaktrohrbereichen Katalysatorsysteme testet, die sich bezüglich des Aktivmaterials und/oder des Katalysatorträgers, insbesondere des Materials und/oder der Form und/oder der Größe der Teilchen des Katalysatorträgers unterscheidet. Hierbei können gleichzeitig jeweils unterschiedliche Katalysatorsysteme unter gleichen oder unterschiedlichen Bedingungen getestet werden oder es kann ein gegebenes Katalysatorsystem gleichzeitig unter verschiedenen Bedingungen getestet werden.

Die Untersuchungen erlauben Rückschlüsse für die Eignung eines Katalysatorsystems unter vorgegebenen, beabsichtigten Betriebsbedingungen. Es ist möglich, die künftige Fahrweise eines Betriebsreaktors zu optimieren sowie das Langzeitverhalten von Katalysatorsystemen, insbesondere auch über große Zeiträume, zu testen.

Eine besonders bevorzugte Verfahrensvariante ist die Gleichstromführung von Wärmetauschmittel und Reaktionsmedium, bevorzugt mit Umlenkung des Wärmetauschmittels in der Pumpe.

Besonders bevorzugt ist ein Verfahren zum Testen von Katalysatorsystemen unter Verwendung eines Reaktors, wobei man die Parameter des Wärmetauschmittels in den einzelnen Kammern, insbesondere die Stromführung des Wärmetauschmittels relativ zum Reaktionsmedium, die Temperatur und/oder den Volumenstrom des Wärmetauschmittels jeweils getrennt einstellt. Weiter bevorzugt kann man das Reaktionsmedium nach dessen Abziehen aus einem Kontaktrohrbereich über den entsprechenden Bereich eines Haubenraums, gegebenenfalls unter Zwischeneinspeisung von Edukten und/oder Zwischenkühlung unmittelbar in einen weiteren Kontaktrohrbereich über den entsprechenden Teil eines Haubenraumes einspeisen, das heißt ohne das Reaktionsmedium außerhalb des Reaktors abführen und erneut einem weiteren Kontaktrohrbereich zuführen zu müssen.

Das erfindungsgemäße Verfahren und die erfindungsgemäße Vorrichtung sind besonders geeignet zum Testen von Katalysatorsystemen für exotherme oder endotherme Reaktionen, insbesondere für Oxidationsreaktionen.

Durch die Erfindung wird somit ein äußerst flexibler Reaktor zum Testen von Katalysatorsystemen zur Verfügung gestellt, der als multifunktional bezeichnet werden kann, da er es ermöglicht, simultan mehrere Versuche zu fahren. Dadurch kann der experimentelle Aufwand bezüglich Zeit und Kosten deutlich vermindert werden. Der Reaktor ermöglicht es, das Langzeitverhalten von Katalysatoren auch über große Zeiträume, beispielsweise in der Größenordnung von einem Jahr, zu testen. Neue Katalysatoren können schneller unter Betriebsbedingungen eingesetzt werden und somit schneller wirtschaftlich verwertet werden. Darüber hinaus können Analyse-Einrichtungen besser genutzt werden.

Die Erfindung wird im folgenden anhand einer Zeichnung näher erläutert.

Es zeigen im einzelnen:
- Figur 1: einen Querschnitt durch einen erfindungsgemäßen Reaktor mit Längsschnitt in Figur 1a
- Figur 2: einen Querschnitt durch eine besondere Ausführungsform eines Haubenraumes,
- Figur 3: einen Längsschnitt durch eine bevorzugte Ausführungsvariante mit Umlenkung des Wärmetauschmittelstromes in einer Pumpe sowie mit vier getrennten Haubenräumen für die Abziehung des Reaktionsmediums,
- Figur 4: einen Querschnitt durch die in Fig. 3 im Längsschnitt dargestellten bevorzugte Ausführungsform,
- Figur 5: eine bevorzugte Pumpenvariante zur Umlenkung des Wärmetauschmittelstroms in der Pumpe und
- Figur 6: eine weitere bevorzugte Ausführungsvariante zur Umlenkung des Wärmetauschmittelstroms in der Pumpe.

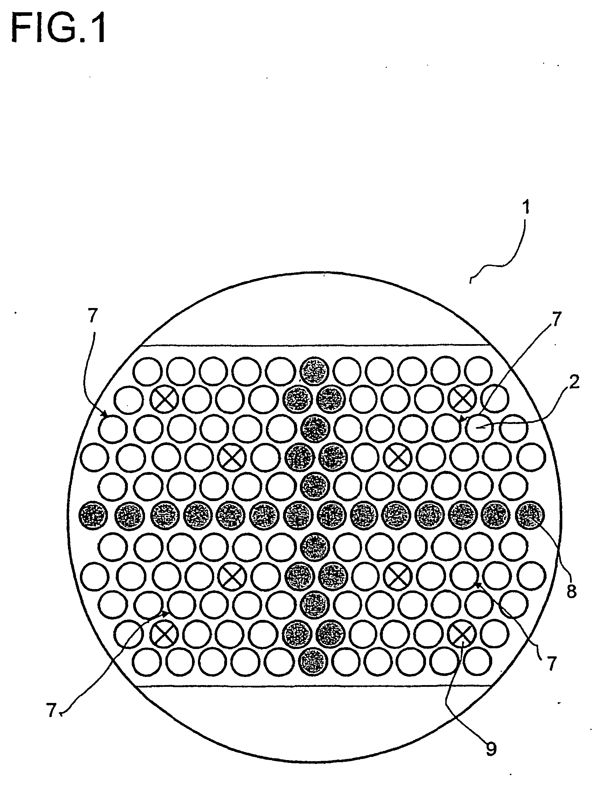

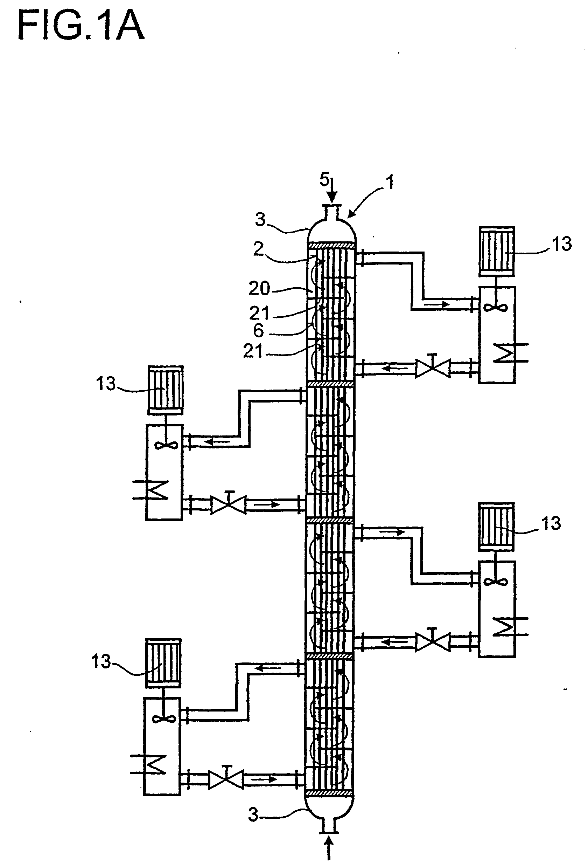

Fig. 1 zeigt einen Querschnitt durch eine Ausfübrungsform eines erfindungsgemäßen Reaktors 1 mit Kontaktrohren 2, die beispielhaft in vier Kontaktrohrbereichen 7 aufgeteilt sind durch Blindrohre 8, die mit Inertmaterial gefüllt sind. In einigen voneinander beabstandet angeordneten Kontaktrohren 9 sind Hülsen mit Probenahmeröhrchen und/oder Thermoelementen vorgesehen.

Fig. 1a zeigt einen Längsschnitt durch die in Fig. 1 dargestellte besondere Ausführungsform, wobei beispielhaft vier getrennte, übereinander angeordnete Wärmetauschmittelkreisläufe dargestellt sind. Im Reaktor 1 mit Hauben 3 sind Kontaktrohre 2 angeordnet. Das Reaktionsmedium 5 wird von oben nach unten durch den Reaktor geleitet und das Wännetauschmittel 6 in jeweils vier getrennten, übereinander angeordneten Kreisläufen zwischen den Kontaktrohren, über jeweils eine Pumpe 13 mit Umlenkung über Umlenkbleche 21. Im Reaktor 1 sind kontaktrohrfreie Räume 20 zur Umlenkung des Wärmetauschmittels 6 vorgesehen.

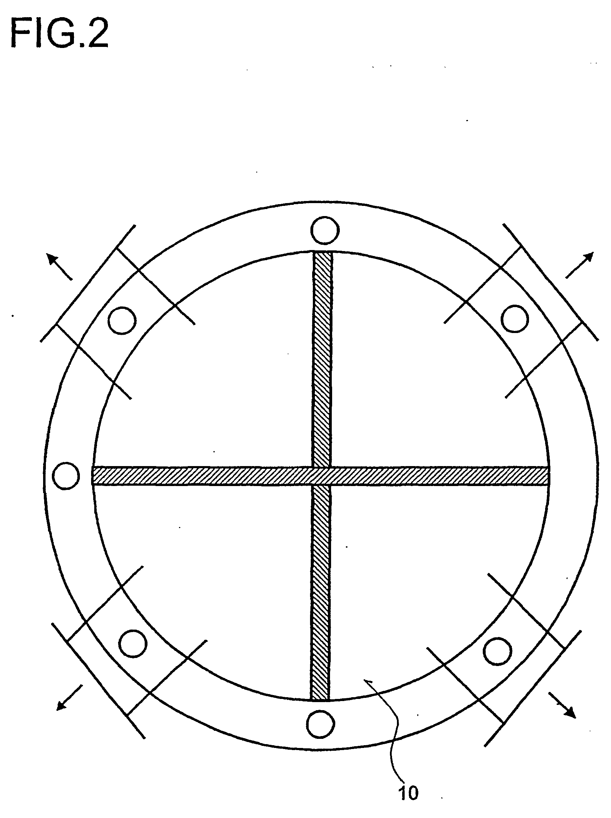

Fig. 2 zeigt einen Querschnitt durch einen Haubenraum einer besonderen Ausführungsvariante eines erfindungsgemäßen Reaktors 1, wobei Trennwände 10 im Haubenraum denselben in vier Bereiche teilen, die den entsprechenden Kontaktrohrbereichen zugeordnet sind. Die Anordnung von Trennwänden 10 kann dabei sowohl im unteren wie auch im oberen oder in beiden Haubenräumen vorgesehen sein.

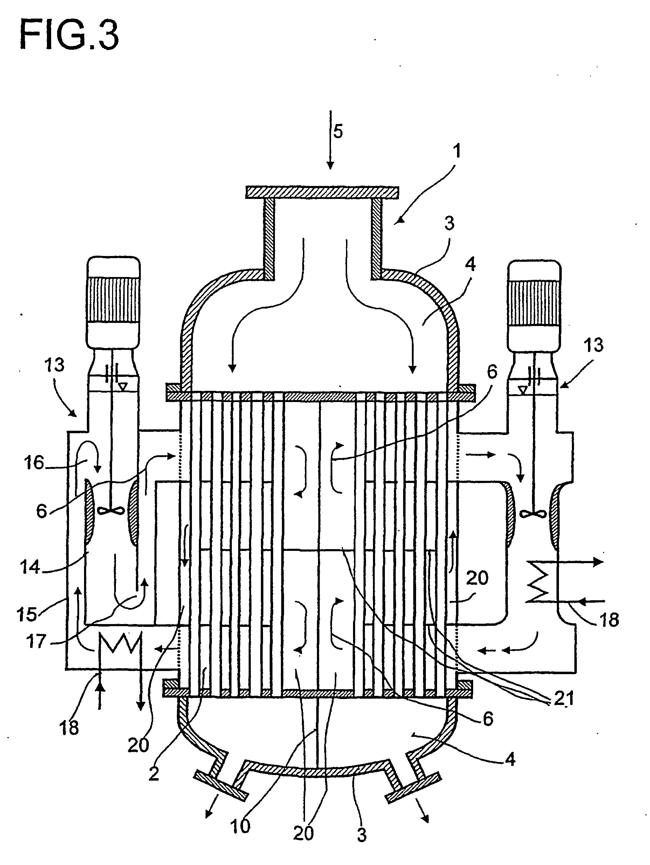

Fig. 3 zeigt einen Längsschnitt durch eine beispielhafte Ausführungsform eines erfindungsgemäßen Reaktors 1 mit Kontaktrohren 2, mit kontaktrohrfreien Räumen 20 im Reaktor 1 zur Umlenkung des Wärmetauschmittels 6, Hauben 3, Haubenräumen 4, und getrennten Wärmetauschmittelkreisläufen 6, wobei die rechte Seite des Querschnitts eine Gegenstromfahrweise von Reaktionsmedium 5 und Wärmetauschmittel 6 darstellt und die linke Hälfte eine Gleichstromfahrweise, jeweils mit Umlenkung des Wärmetauschmittels 6 in einer Pumpe 13. Das Reaktionsmedium 5 kann, wie beispielhaft dargestellt, von oben dem Reaktor 1 zugeführt werden, jedoch ist auch eine Zuführung desselben von unten gleichermaßen möglich. Bezugszeichen 14 bezeichnet das Pumpenleitrohr mit Zuströmung 16 im oberen Bereich desselben und Abströmung 17 in seinem unteren Bereich und Bezugszeichen 18 Wärmetauscher, die sowohl in der Pumpe selbst (so in der Darstellung auf der rechten Seite des Längsschnitts) oder in der Rohrleitung zur Pumpe, wie in der Darstellung auf der linken Seite in Fig. 3 angeordnet sein können.

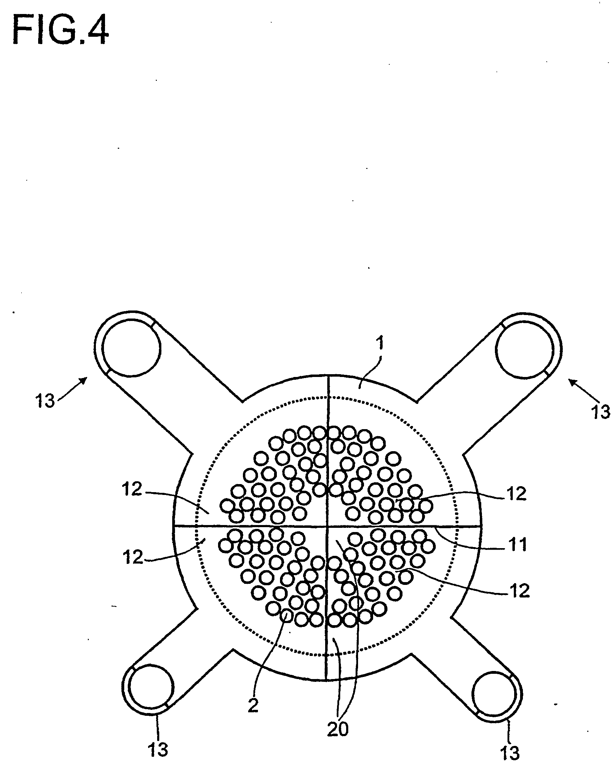

Fig. 4 stellt einen Querschnitt durch die in Fig. 3 im Längsschnitt dargestellte besondere Ausführungsform eines erfindungsgemäßen Reaktors 1 mit Kontaktrohren 2 dar, wobei Trennwände 11 den vom Wärmetauschmittel 6 durchströmten Zwischenraum zwischen den Kontaktrohren 2 in Kammern 12, vorliegend beispielhaft vier, aufteilen. Die vier vorliegend beispielhaft dargestellten getrennten Wärmetauschmittelkreisläufe werden jeweils über eine Pumpe 13 aufrechterhalten, wobei die Pumpen im oberen Teil der Darstellung gegenüber den Pumpen im unteren Teil der Darstellung größer gezeichnet sind, um zu verdeutlichen, daß es sich um Pumpen mit Umlenkung des Wärmetauschmittelstroms 6 in der Pumpe handelt, wie in Fig. 3 im linken Teil des Querschnitts verdeutlicht.

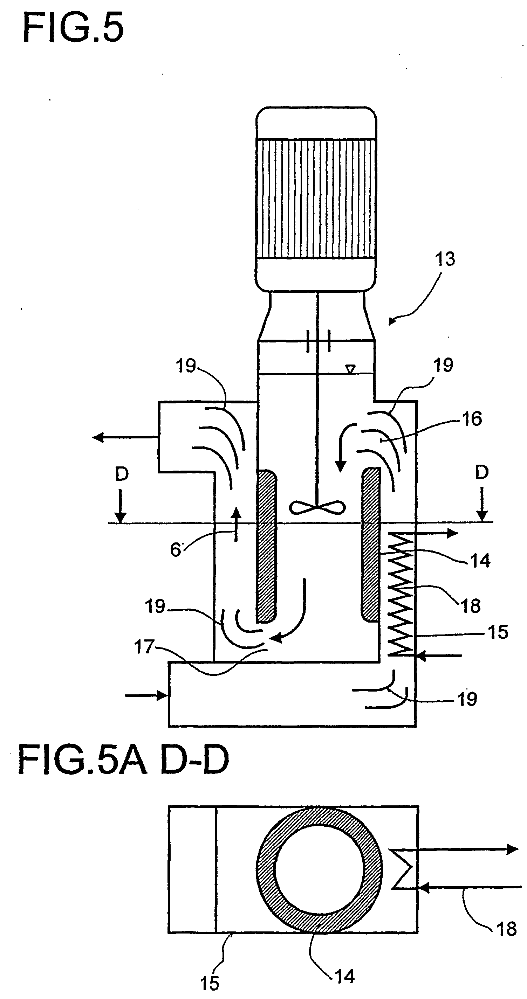

Fig. 5 zeigt eine Pumpe 13 mit Umlenkung des Wärmetauschmittels 6 in der Pumpe, wie Leitrohr 14 mit Zuströmung 16 im oberen Bereich bzw. Abströmung 17 im unteren Bereich desselben, mit Gehäuse 15 um das Leitrohr 14 sowie einem im Gehäuse 15 angeordneten Wärmetauscher 18. Der Querschnitt D-D in Fig. 5a verdeutlicht die im Querschnitt rechteckige Ausgestaltung des Gehäuses 15. Bevorzugt sind in einem oder mehreren Umlenkbereichen des Gehäuses 15 Umlenkbleche 19 für das Wärmetauschmittel angeordnet.

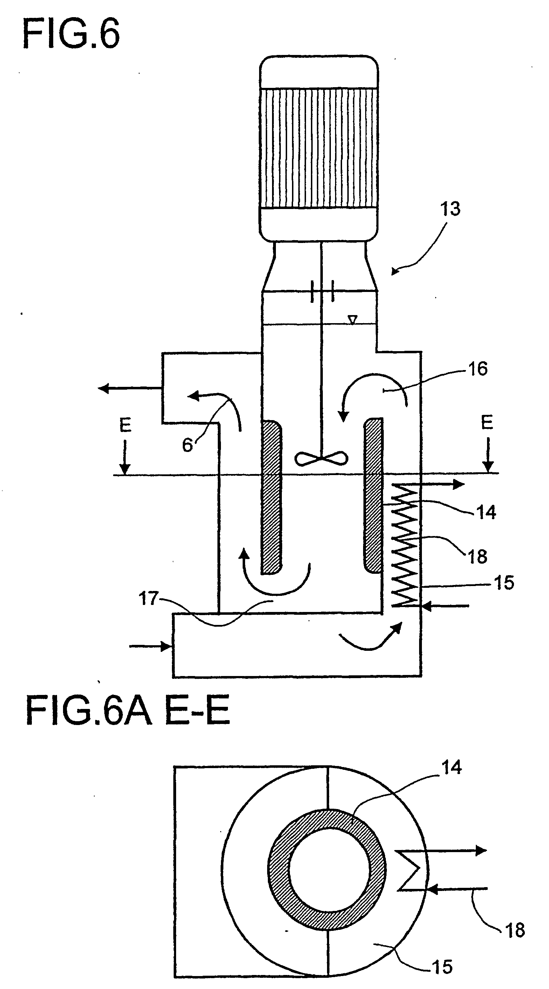

Fig. 6 zeigt eine weitere Ausführungsvariante einer Pumpe 13 zur Umlenkung des Wärmetauschmittels 6 mit Querschnitt E-E in Fig. 6a, wobei abweichend von der Darstellung in Fig. 5 das Gehäuse 15, wie in der Querschnittsdarstellung in Fig. 6a verdeutlicht, im Querschnitt kreisförmig um das Pumpenleitrohr 14 herum angeordnet ist.

## Patentansprüche

1. Reaktor (1) zum Testen von Katalysatorsystemen mit mehreren, im Reaktorinnenraum parallel zueinander angeordneten Kontaktrohren (2), die an ihren Enden in Rohrböden eingeschweißt sind, sowie mit Hauben (3) an beiden Reaktorenden, die jeweils einen Haubenraum (4) abgrenzen, wobei ein fluides Reaktionsmedium (5) über einen Haubenraum (4) den Kontaktrohren (2) zugeführt wird, die Kontaktrohre (2) durchströmt und über den anderen Haubenraum (4) abgeführt wird sowie mit einem Wärmetauschmittelkreislauf mit Zuführung des Wärmetauschmittels (6) an einem Reaktorende, Durchströmen des Zwischenraums zwischen den Kontaktrohren (2) und Ableitung am anderen Reaktorende, **dadurch gekennzeichnet, daß** die Kontaktrohre (2) in zwei oder mehreren, thermisch voneinander getrennten Kontaktrohrbereichen (7) gruppiert angeordnet sind.

2. Reaktor (1) nach Anspruch 1, **dadurch gekennzeichnet, daß** die Trennung zwischen den einzelnen Kontaktrohrbereichen (7) mittels Blindrohren oder runden Vollmaterialstäben (8) mit gleichem Außendurchmesser wie die Kontaktrohre (2) ausgeführt ist.

3. Reaktor (1) nach Anspruch 1 oder 2, **dadurch gekennzeichnet, daß** in einem oder mehreren Kontaktrohrbereichen (7) jeweils mindestens ein Kontaktrohr (2) mit einer Hülse (9) zur Aufnahme eines Thermoelementes ausgestattet, im übrigen mit Inertmaterial, insbesondere einer Schüttung von Al₂O₃ befüllt und an mindestens einem Ende geschlossen ist.

4. Reaktor (1) nach einem der Ansprüche 1 bis 3, **dadurch gekennzeichnet, daß** in einem oder mehreren Kontaktrohrbereichen (7) jeweils ein oder mehrere Kontaktrohre (2) mit Hülsen (9) zur Aufnahme von Probenahmeröhrchen und/oder Thermoelementen angeordnet sind.

5. Reaktor (1) nach einem der Ansprüche 1 bis 4, **dadurch gekennzeichnet, daß** sich die Kontaktrohre (2) in den einzelnen Kontaktrohrbereichen (7) bezüglich der Kontaktrohrinnendurchmesser und/oder der Kontaktrohrteilung unterscheiden.

6. Reaktor (1) nach einem der Ansprüche 1 bis 5, **dadurch gekennzeichnet, daß** für die Kontaktrohre (2) eines oder mehrerer Kontaktrohrbereiche (7) jeweils eine Abdeckung vorgesehen ist.

7. Reaktor (1) nach einem der Ansprüche 1 bis 6, **dadurch gekennzeichnet, daß** der Haubenraum (4) über den das Reaktionsmedium (5) abgezogen wird, mittels Trennwänden (10) aufgeteilt ist, dergestalt, daß aus jedem Kontaktrohrbereich (7) das Reaktionsmedium (5) getrennt abgezogen werden kann.

8. Reaktor (1) nach einem der Ansprüche 1 bis 7, **dadurch gekennzeichnet, daß** zusätzlich oder alternativ zum Haubenraum (4), über den das Reaktionsmedium (5) abgezogen wird der Haubenraum (4), über den das Reaktionsmedium (5) zugeführt wird, mittels Trennwänden (10) aufgeteilt ist, dergestalt daß die Zuführung des Reaktionsmediums (5) zu den einzelnen Kontaktrohrbereichen (7) getrennt möglich ist.

9. Reaktor (1) nach einem der Ansprüche 1 bis 8, **dadurch gekennzeichnet, daß** der von Wärmetauschmittel (6) durchströmte Zwischenraum zwischen den Kontaktrohren (2) mittels Trennwänden (11) in zwei oder mehrere, bevorzugt vier Kammern (12), jeweils mit Zu- und Abführung von Wärmetauschmittel (6), aufgeteilt ist, wobei jede Kammer (12) jeweils einem Kontaktrohrbereich (7) entspricht.

10. Reaktor (1) nach einem der Ansprüche 1 bis 9, mit vertikal angeordneter Längsachse, mit Zuführung des Wärmetauschmittels (6) in den Zwischenraum zwischen den Kontaktrohren (2) im oberen Bereich des Reaktors (1) und Abführung des Wärmetauschmittels (6) aus dem unteren Bereich des Reaktors (1), bevorzugt über jeweils eine Ringleitung, wobei das aus dem unteren Bereich des Reaktors (1) mittels einer Pumpe (13) abgezogene Wärmetauschmittel (6) in ein Gehäuse (15) einströmt, das das Pumpenleitrohr (14) umschließt, im Bereich zwischen der Innenwand des Gehäuses (15) und der Außenwand des Pumpenleitrohrs (14), gegebenenfalls über einen Wärmetauscher (18), nach oben strömt, über eine Öffnung (16) im oberen Bereich des Pumpenleitrohrs (14) in den Innenraum des Pumpenleitrohrs (14) einströmt, diesen von oben nach unten durchströmt, über eine Öffnung (17) im unteren Bereich des Pumpenleitrohrs (14) in einen weiteren Zwischenraum zwischen der Innenwand des Gehäuses (15) und Außenwand des Pumpenleitrohrs (14) einströmt, diesen Zwischenraum von unten nach oben durchströmt und über eine Öffnung in dessen oberen Bereich in den oberen Bereich des Zwischenraums zwischen den Kontaktrohren (2) einströmt.

11. Reaktor (1) nach Anspruch 10, **dadurch gekennzeichnet, daß** das Gehäuse (15) mit rechteckigem Querschnitt ausgebildet ist.

12. Reaktor (1) nach Anspruch 10, **dadurch gekennzeichnet, daß** das Gehäuse (15) mit kreisförmigem Querschnitt ausgebildet ist.

13. Verfahren zum Testen von Katalysatorsystemen mit Hilfe eines Reaktors (1) nach einem der Ansprüche 1 bis 12, **dadurch gekennzeichnet, daß** man in jeweils verschiedenen Kontaktrohrbereichen (7) jeweils Katalysatorsysteme testet, die sich bezüglich des Aktivmaterials und/oder des Katalysatorträgers, insbesondere des Materials, und/oder der Form und/oder der Größe der Teilchen des Katalysatorträgers unterscheiden.

14. Verfahren zum Testen von Katalysatorsystemen nach Anspruch 13, **dadurch gekennzeichnet, daß** Reaktionsmedium (5) und Wärmetauschmittel (6) im Gleichstrom geführt werden.

15. Verfahren zum Testen von Katalysatorsystemen unter Verwendung eines Reaktors ( 1 ) nach Anspruch 9, **dadurch gekennzeichnet, daß** man die Parameter des Wärmetauschmittels (6) in den einzelnen Kammern (12), insbesondere die Stromführung des Wärmetauschmittels (6) relativ zum Reaktionsmedium (5), die Temperatur und/oder den Volumenstrom des Wärmetauschmittels (6) jeweils getrennt einstellt.

16. Verfahren nach einem der Ansprüche 13 bis 15, **dadurch gekennzeichnet, daß** man das Reaktionsmedium (5), nach dessen Abziehen aus einem Kontaktrohrbereich (7) über den entsprechenden Bereich eines Haubenraums (4), gegebenenfalls unter Zwischeneinspeisung von Edukten und/oder Zwischenkühlung unmittelbar in einen weiteren Kontaktrohrbereich (7), über den entsprechenden Teil eines Haubenraumes (4) einspeist.

17. Verwendung eines Reaktors nach einem der Ansprüche 1 bis 12 oder eines Verfahrens nach einem der Ansprüche 13 bis 16 zum Testen von Katalysatorsystemen für Oxidationsreaktionen, insbesondere für Phthalsäureanhydrid, Maleinsäureanhydrid, Acrolein oder Acrylsäure.

## Claims

1. A reactor (1) for testing catalyst systems which has a plurality of catalyst tubes (2) which are arranged parallel to one another in the interior space of the reactor and whose ends are welded into tube plates and also has caps (3) at each end of the reactor which each bound a cap space (4), with a fluid reaction medium (5) being fed via one cap space (4) into the catalyst tubes (2), flowing through the catalyst tubes (2) and being discharged via the other cap space (4), and is also provided with a heat exchange medium circuit in which the heat exchange medium (6) is fed in at one end of the reactor, flows through the intermediate space between the catalyst tubes (2) and flows out at the other end of the reactor, wherein the catalyst tubes (2) are arranged in groups in two or more catalyst tube regions (7) which are thermally separate from one another.

2. A reactor (1) as claimed in claim 1, wherein the separation between the individual catalyst tube regions (7) is achieved by means of dummy tubes or solid round rods (8) having the same external diameter as the catalyst tubes (2).

3. A reactor (1) as claimed in claim 1 or 2, wherein one or more catalyst tube regions (7) are each provided with at least one catalyst tube (2) having a sheath (9) for accommodating a thermocouple and otherwise filled with inert material, in particular a bed of Al₂O₃ and closed at at least one end.

4. A reactor (1) as claimed in any of claims 1 to 3, wherein one or more catalyst tube regions (7) are each provided with one or more catalyst tubes (2) with sheaths (9) for accommodating sampling tubes and/or thermocouples.

5. A reactor (1) as claimed in any of claims 1 to 4, wherein the catalyst tubes (2) in the individual catalyst tube regions (7) differ in respect of their internal diameter and/or their spacing.

6. A reactor (1) as claimed in any of claims 1 to 5, wherein a cover is provided for the catalyst tubes (2) of one or more catalyst tube regions (7).

7. A reactor (1) as claimed in any of claims 1 to 6, wherein the cap space (4) via which the reaction medium (5) is taken off is divided by means of dividing walls (10) so that the reaction medium (5) can be taken off separately from each catalyst tube region (7).

8. A reactor (1) as claimed in any of claims 1 to 7, wherein, in addition to or as an alternative to the cap space (4) via which the reaction medium (5) is taken off, the cap space (4) via which the reaction medium (5) is fed in is divided by means of dividing walls (10) so that the reaction medium (5) can be fed separately into the individual catalyst tube regions (7).

9. A reactor (1) as claimed in any of claims 1 to 8, wherein the intermediate space through which the heat exchange medium (6) flows between the catalyst tubes (2) is divided by means of dividing walls (11) into two or more, preferably four, chambers (12), each with an inlet and outlet for heat exchange medium (6), where each chamber (12) corresponds to a catalyst tube region (7).

10. A reactor (1) as claimed in any of claims 1 to 9 with a vertical longitudinal axis, with introduction of the heat exchange medium (6) into the intermediate space between the catalyst tubes (2) in the upper region of the reactor (1) and discharge of the heat exchange medium (6) from the lower region of the reactor (1), preferably via a ring line in each case, with the heat exchange medium (6) taken off from the lower region of the reactor (1) by means of a pump (13) flowing into a housing (15) which encloses the pump guide tube (14), flowing upward in the region between the interior wall of the housing (15) and the outer wall of the pump guide tube (14), optionally via a heat exchanger (18), flowing into the interior space of the pump guide tube (14) via an opening (16) in the upper region of the pump guide tube (14), flowing from the top downward through this space, flowing into a further intermediate space between the interior wall of the housing (15) and the outer wall of the pump guide tube (14) via an opening (17) in the lower region of the pump guide tube (14), flowing from the bottom upward through this intermediate space and flowing into the upper region of the intermediate space between the catalyst tubes (2) via an opening in the upper region of this space.

11. A reactor (1) as claimed in claim 10, wherein the housing (15) has a rectangular cross section.

12. A reactor (1) as claimed in claim 10, wherein the housing (15) has a circular cross section.

13. A method of testing catalyst systems with the aid of a reactor (1) as claimed in any of claims 1 to 12, wherein catalyst systems which differ in respect of the active material and/or the catalyst support, in particular the material and/or the shape and/or the size of the particles of the catalyst support, are tested in different catalyst tube regions (7).

14. A method of testing catalyst systems as claimed in claim 13, wherein reaction medium (5) and heat exchange medium (6) are conveyed in cocurrent.

15. A method of testing catalyst systems using a reactor (1) as claimed in claim 9, wherein the parameters of the heat exchange medium (6) in the individual chambers (12), in particular the direction of flow of the heat exchange medium (6) relative to the reaction medium (5), the temperature and/or the volume flow of the heat exchange medium (6) are in each case set separately.

16. A method as claimed in any of claims 13 to 15, wherein the reaction medium (5) after it has been taken off from a catalyst tube region (7) via the corresponding region of a cap space (4) is, optionally with intermediate introduction of starting materials and/or intermediate cooling, fed directly into a further catalyst tube region (7) via the corresponding part of a cap space (4).

17. The use of a reactor as claimed in any of claims 1 to 12 or a method as claimed in any of claims 13 to 16 for testing catalyst systems for oxidation reactions, in particular for phthalic anhydride, maleic anhydride, acrolein or acrylic acid.

## Revendications

1. Réacteur (1) pour tester des systèmes catalytiques comprenant, dans l'espace intérieur du réacteur, une multiplicité de tubes de contact (2) disposés parallèlement les uns aux autres, qui sont soudés à leurs extrémités des plateaux à tubes, et comportant des calottes (3) aux deux extrémités du réacteur, qui délimitent à chaque fois un espace intérieur de calotte, où un milieu de réaction fluide (5) est amené aux tubes de contact (2) via un espace intérieur de calotte (4), parcourt les tubes de contact (2) et est évacué via l'autre espace intérieur de calotte (4), ainsi qu'un circuit de milieu d'échange de chaleur, avec amenée du milieu d'échange de chaleur (6) à une extrémité du réacteur, passage dans l'espace intermédiaire entre les tubes de contact (2) et évacuation à l'autre extrémité du réacteur, **caractérisé en ce que** les tubes de contact (2) sont agencés de manière groupée en deux ou plus de deux zones (7) de tubes de contact, thermiquement séparées les unes des autres.

2. Réacteur (1) selon la revendication 1, **caractérisé en ce que** la séparation entre les zones individuelles (7) de tubes de contact est réalisée au moyen de tubes aveugles ou de tiges d'un matériau plein (8) de même diamètre extérieur que les tubes de contact (2).

3. Réacteur (1) selon la revendication 1 ou 2, **caractérisé en ce que**, dans une ou plusieurs des zones (7) de tubes de contact, à chaque fois au moins un tube de contact (2) est équipé d'un manchon destiné à recevoir un thermocouple, et est par ailleurs rempli d'un matériau inerte, en particulier un remplissage de Al₂O₃, et est fermé à au moins une extrémité.

4. Réacteur (1) selon l'une quelconque des revendications 1 à 3, **caractérisé en ce que**, dans une ou plusieurs des zones (7) de tubes de contact, sont installés à chaque fois un ou plusieurs tubes de contact (2) à manchon (9) destinés à recevoir de petits tubes de prélèvement d'échantillons et/ou des thermocouples.

5. Réacteur (1) selon l'une quelconque des revendications 1 à 4, **caractérisé en ce que** les tubes de contact (2) dans les zones individuelles (7) de tubes de contact diffèrent en ce qui concerne le diamètre intérieur du tube de contact et/ou le partage des tubes de contact.

6. Réacteur (1) selon l'une quelconque des revendications 1 à 7, **caractérisé en ce qu'**il est à chaque fois prévu une couverture pour les tubes de contact (2) d'une ou plusieurs zones (7) de tubes de contact.

7. Réacteur (1) selon l'une quelconque des revendications 1 à 6, **caractérisé en ce que** l'espace intérieur de calotte (4) via lequel le milieu réactionnel (5) est soutiré est partagé par des parois de séparation (10), de manière que le milieu réactionnel (5) puisse être soutiré séparément de chaque zone (7) de tubes de contact.

8. Réacteur (1) selon l'une quelconque des revendications 1 à 7, **caractérisé en ce que**, en plus de ou alternativement à l'espace intérieur de calotte (4) via lequel le milieu réactionnel (5) est soutiré, l'espace intérieur de calotte (4) via lequel le milieu réactionnel (5) est introduit est partagé par des parois de séparation (10), de manière que l'amenée du milieu de réaction (5) puisse être opérée séparément dans les zones individuelles (7) de tubes de contact.

9. Réacteur (1) selon l'une quelconque des revendications 1 à 8, **caractérisé en ce que** l'espace intermédiaire entre les tubes de contact (2), qui est parcouru par le milieu d'échange de chaleur (6), est partagé par des parois de séparation (11) en deux ou plus de deux, de préférence en quatre chambres (12), munies à chaque fois d'une amenée et d'une sortie de milieu d'échange de chaleur (6), chaque chambre (12) correspondant à chaque fois à une zone (7) de tubes de contact .

10. Réacteur (1) selon l'une quelconque des revendications 1 à 9, à axe longitudinal disposé verticalement, avec amenée du milieu d'échange de chaleur (6) dans l'espace intermédiaire entre les tubes de contact (2) dans la zone supérieure du réacteur (1), et sortie du milieu d'échange de chaleur (6) de la zone inférieure du réacteur (1 ), de préférence à chaque fois via une conduite circulaire, où le milieu d'échange de chaleur (6) soutiré de la zone inférieure du réacteur (1) au moyen d'une pompe (13) pénètre dans une enveloppe (15) qui entoure le tube de guidage (14) de la pompe, dans la zone entre la paroi intérieure de l'enveloppe (15) et la paroi extérieure du tube de guidage de la pompe (15), éventuellement via un échangeur de chaleur (18), s'écoule vers le haut, pénètre via une ouverture (16) dans la zone supérieure du tube de guidage (14) de la pompe dans l'espace intérieur du tube de guidage (14) de la pompe, parcourt ce dernier de haut en bas, pénètre via une ouverture (17) dans la zone extérieure du tube de guidage (14) de la pompe dans un deuxième espace intermédiaire entre la paroi intérieure de l'enveloppe (15) et la paroi extérieure du tube de guidage (14) de la pompe, parcourt cet espace intermédiaire de bas en haut et pénètre via une ouverture dans sa zone supérieure dans la zone supérieure de l'espace intermédiaire entre les tubes de contact (2).

11. Réacteur (1) selon la revendication 10, **caractérisé en ce que** l'enveloppe (15) est de section transversale rectangulaire.

12. Réacteur (1) selon la revendication 10, **caractérisé en ce que** l'enveloppe (15) est de section transversale circulaire.

13. Procédé pour tester des systèmes catalytiques à l'aide d'un réacteur (1) selon l'une quelconque des revendications 1 à 12, **caractérisé en ce que** l'on teste, dans des zones de tubes de contact (7) respectivement différentes, des systèmes catalytiques qui diffèrent à chaque fois par le matériau actif et/ou le support du catalyseur, en particulier le matériau, et/ou par la forme et/ou la taille des particules du support du catalyseur.

14. Procédé de test de systèmes catalytiques selon la revendication 13, **caractérisé en ce que** le milieu de réaction (5) et le milieu d'échange de chaleur (6) sont guidés en courants parallèles.

15. Procédé pour tester des systèmes catalytiques en utilisant un réacteur (1) selon la revendication 9, **caractérisé en ce que** l'on ajuste à chaque fois séparément les paramètres du milieu d'échange de chaleur (6) dans les différentes chambres (12), en particulier la conduite de l'écoulement du milieu d'échange de chaleur (6) par rapport au milieu de réaction (5), la température et/ou le débit volumique du milieu d'échange de chaleur (6).

16. Procédé selon l'une quelconque des revendications 13 à 15, **caractérisé en ce que** le milieu de réaction (5), après son extraction d'une zone (7) de tubes de contact via une zone correspondante d'un espace intérieur de calotte (4), éventuellement avec introduction intermédiaire d'éduits et/ou refroidissement intermédiaire, est directement introduit dans une autre zone (7) de tubes de contact via une zone correspondante d'un espace intérieur de calotte (4).

17. Utilisation d'un réacteur selon l'une quelconque des revendications 1 à 12 ou d'un procédé selon l'une quelconque des revendications 13 à 16 pour tester des systèmes catalytiques destinés à des réactions d'oxydation, en particulier pour l'anhydride phtalique, l'anhydride maléique, l'acroléine ou l'acide acrylique.
